# EUROPEAN PATENT SPECIFICATION

(11) **EP 1 356 972 B1**
(45) Date of publication and mention of the grant of the patent: **04.07.2007**
(21) Application number: 02445044.7
(22) Date of filing: 08.04.2002
(51) Int. Cl.: B60K 6/02, F16H 61/02

(54) **Method for controlling a hybrid vehicle drivetrain**
Steuerungsverfahren für ein Hybrid angetriebenes Kraftfahrzeug
Procédé de commande pour véhicule automobile à propulsion hybride

(43) Date of publication of application: 29.10.2003
(60) Divisional application: 05110259.8
(73) Proprietor: Ford Global Technologies, LLC, Dearborn, MI 48126 (US)
(72) Inventor: Jurland, Per, 414 59 Göteberg (SE)
(74) Representative: Hellbom, Lars Olof

(56) References cited:
- EP-A- 0 903 258
- EP-A- 1 101 650
- EP-A- 1 160 119
- US-A- 5 411 449
- US-A- 5 564 400
- US-A- 5 935 040
- US-A- 6 110 066

## Description

### TECHNICAL FIELD

The present invention relates to a method in a vehicle comprising a drivetrain, comprising a drive unit, such as an internal combustion engine, with a motive power output, a transmission, mechanically connected to the motive power output, directly or indirectly, and an electric machine, which can be used at least as a motor, mechanically connected to the motive power output, directly or indirectly, the vehicle further comprising an accelerator control device and drivetrain control means, which is connected to the accelerator control device and the drivetrain, the drivetrain control means being adapted to select a gear of the transmission based on a set of gear shift control elements, including at least one gear shift schedule and at least one gear shift schedule input parameter, and to send at least one signal to the transmission so as to control the gear state of the latter.

### BACKGROUND

In a vehicle comprising a drivetrain with an automatic transmission, controlled by an electronic control device such as a Transmission Control Module (TCM), the selection of gears in the transmission is made according to a predetermined gear shift schedule, according to which a decision to shift gear can be ordered based on information about, e.g. vehicle speed and accelerator pedal position. For achieving a good fuel economy, the shift schedule can be adapted so that, during an acceleration, gear shifts will occur at a relatively early stage. A problem with this approach is that early gear shifts will decrease the amount of torque of the drivedrain. This problem becomes obvious in situations where a relatively large amount of torque is desired, for example in an acceleration or when the vehicle is moving uphill.

Vehicle drivetrain systems comprising an internal combustion engine, an automatic transmission and an electric machine, which can be used as a motor, are known in the art, see for example GB2348630A. In vehicles comprising such an electric engine, e.g. an Integrated Starter/Generator (ISG), the latter can be used to provide additional torque in situations where this is desired. However, the amount of torque available from the ISG is dependent on properties of its power source, i.e. batteries. Additionally, the amount of torque from the ISG may not suffice for the drivetrain output rotational speed at hand.

EP1101650A2, considered to be the closest prior art, discloses, in a vehicle provided with an electric motor assisted output torque, a gear shift schedule in a priority sequence in the drive power control, the sequence being: based on a requested torque, check if the engine torque suffices; if not, check if the electric motor torque and the engine torque added together suffices; of not, change gear. Thus, EP1101650A2 entails the time consuming and costly process of providing a special gear strategy entirely designed for the drive arrangement, i.e. engine + electric motor, at hand.

### SUMMARY OF THE INVENTION

It is an object of the invention to provide a method and a system in a vehicle comprising a drivetrain, comprising a drive unit, an automatic transmission and an electric machine at which a low fuel consumption can be achieved in combination with a high torque.

The object of the invention is achieved by a method according to claim 1.

This will result in a dynamic adaptation of gear shifts based at least partly on torque available from the electric machine. In turn this will optimize the gear shift so that the lowest fuel consumption can be achieved without lowering the torque reserves in situations where these are desired.

Also, the function of the invention can be added as a "bolt-on" solution onto existing transmission control systems, without changes having to be performed in the latter.

### BRIEF DESCRIPTION OF THE FIGURES

The invention will be described in greater detail below with the aid of the accompanying drawings, in which
- fig. 1 is a schematic block diagram if a vehicle drivetrain and a control system therefore,
- fig. 2 is a flow diagram of a method according to a preferred embodiment of the invention,
- fig. 3 and 4 are diagrams referring to a step in the method shown in the flowchart in fig. 2, and
- fig. 5 is a flow diagram of a method according to an alternative embodiment of the invention.

### DETAILED DESCRIPTION

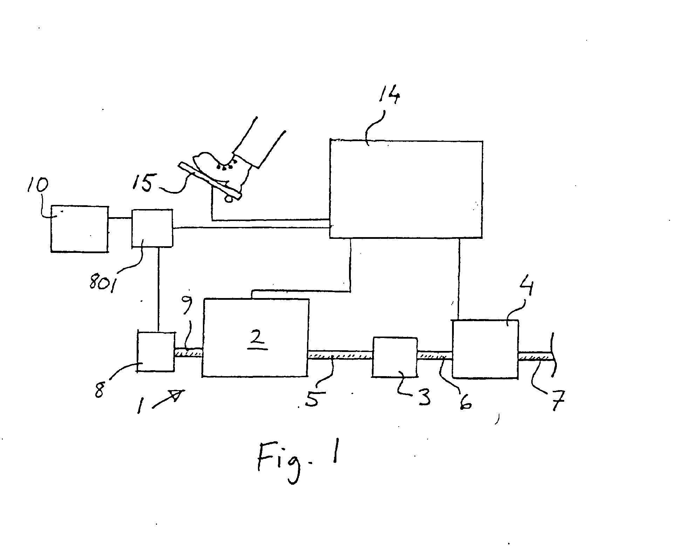

Fig. 1 shows schematically a vehicle drivetrain 1 and a control system therefore. The drivetrain comprises a drive unit in the form of an internal combustion engine 2 with a motive power output in the form of a crankshaft, here also referred to as an engine output shaft 5. A hydraulic automatic transmission 4 is indirectly connected to the engine output shaft 5 via an intermediate fluidic torque converter 3, which is adapted to drive a transmission input shaft 6. A transmission output shaft 7 drives the wheels of the vehicle for its propulsion.

The drivetrain 1 also comprises an electric machine in the form of an integrated starter/generator (ISG) 8, which can be used as an electrical motor and a generator. However, the invention can also be applied where this electric machine is adapted to operate as a motor only. The ISG is connected directly to the engine crankshaft via an ISG output shaft 9, and therefore the ISG 8 is adapted to have the same rotational speed as the engine. Alternatively the ISG 8 can be connected to the engine crankshaft indirectly via a gear, so that it is adapted to have a rotational speed different from the engine 2.

Fig. 1 shows the electric machine 8 as located on a side of the engine 2, being opposite to a side on which the transmission 4 is located. As an alternative the electric machine 8 is located between the engine 2 and the transmission 4.

Reference number 10 denotes an electric system of the vehicle. The electric system 10 comprises a battery and electricity consuming devices in the vehicle. When the ISG 8 operates as a motor, power is provided to it from the battery. An ISG-controller 801 is connected to, and adapted to control the ISG 8.

Vehicle control means, here referred to as drivetrain control means 14 or drive train control device, is a control system adapted to control the drivetrain 1 by means of a plurality of actuator controls, as is known to the person skilled in the art. The drivetrain control means 14 can comprise an engine control module (ECM) and a transmission control module (TCM).

The drivetrain control means 14 is connected to and adapted, in a manner known in the art, to receive signals from an accelerator control device in the form of an accelerator pedal 15. The drivetrain control means 14 is also adapted to receive engine condition parameters and to send signals to control the operation of the engine 2. As is known to the person skilled in the art, the drivetrain control means 14 is adapted to determine the engine output torque based on certain predetermined drivetrain parameters, e.g. air pressure, air temperature, engine temperature, and rotational speed.

The drivetrain control means 14 is also adapted, in a manner known in the art, to receive, by means of the ISG-controller 801, condition parameters of the electric system 10 of the vehicle. These parameters can include state of charge (SOC) of the battery, battery temperature, and also the electric consumption requirements of electricity consuming devices. Static information about components in the electric system can be stored in the drivetrain control means 14, such as battery durability and battery limitations.

The drivetrain control means 14 is also adapted to send control signals to the ISG-controller 801, to control the output power, the output torque or the rotational speed of the ISG 8, when the latter is operating as an electric motor.

The drivetrain control means 14 is adapted to receive, in a manner known in the art, signals corresponding to transmission condition parameters and to send control signals to the transmission 4. Among other parameters the drivetrain control means 14 is adapted to receive information about the transmission input and output rotational speed.

The drivetrain control means 14 is adapted to select a gear of the transmission based on a set of gear shift control elements. This set includes a predetermined gear shift schedule and gear shift schedule input parameters. Using the gear shift schedule the drivetrain control means 14 can send signals to the transmission 4 so as to change gear of the latter. The gears are selected based on the gear shift schedule input parameters, which could be values corresponding to the speed of the vehicle, and signals from the accelerator pedal 15. Instead of accelerator pedal signals a requested torque determined on the basis of the accelerator pedal signals can form a gear shift schedule input parameter.

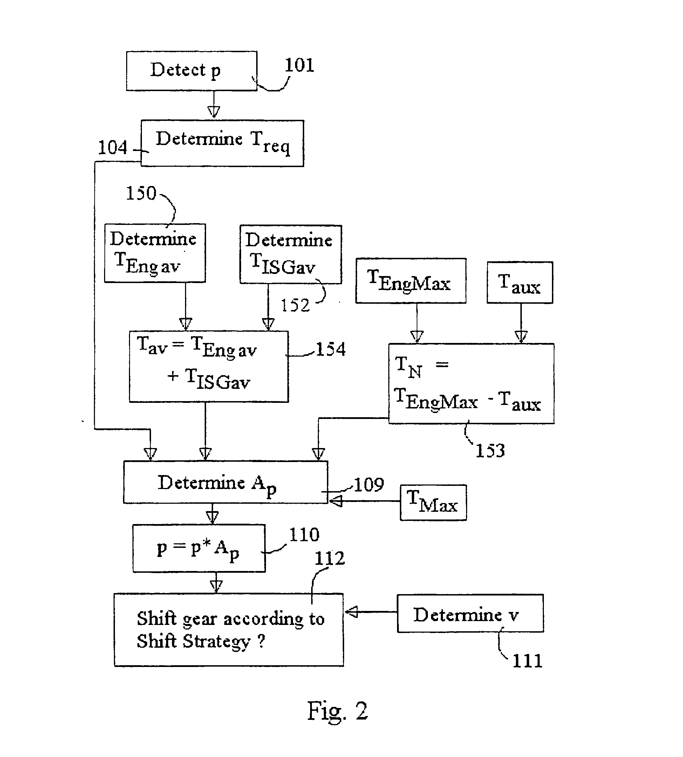

The flowchart in fig. 2 depicts a method according to a preferred embodiment of the invention. The steps in the method can be used in a situation in which an increased output torque from the vehicle drivetrain is desired. This could be, for example, at an acceleration of the vehicle or when the vehicle is moving uphill. The method comprises detection by the drivetrain control means 14 of a signal p corresponding to the setting of the accelerator pedal (block 101).

In response to the detection of the accelerator pedal signal p (block 101), the drivetrain control means 14 determines (block 104) a corresponding requested crankshaft torque *T_{req}* according to a predetermined accelerator pedal signal to requested torque correlation. Alternatively, instead of torque, another physical entity, such as force or power, is used to represent the requested performance of the drivetrain.

In a manner known in the art the drivetrain control means 14 determines an available torque of the engine *T_{Engav}* based on engine specific parameters, for example engine rotational speed, air temperature, engine temperature and air pressure (block 150).

The drivetrain control means 14 determines an available ISG torque *T_{ISGav}* (block 152), based on information of the power source, i.e. the battery, of the ISG 8, which information can include SOC, battery current RMS limits, battery temperature and battery durability and limitations.

The drivetrain control means 14 calculates an available torque *Tₐᵥ* as the sum of the available torque of the engine *T_{Engav}* and the available ISG torque *T_{ISGav}* (block 154).

A nominal torque *T_{N}* is calculated (block 153) as *T_{EngMax} -Tₐᵤₓ .*

*T_{EngMax}* is the maximum engine output torque, which has a predetermined value and corresponds to the highest level of torque that can be produced by the engine at current rotational speed, or the torque that the engine is allowed to produce at current rotational speed. The engine output torque being dependent upon rotational speed means that *T_{EngMax}* is dependent upon current selected gear, since the latter determines the rotational speed of the engine. Additionally, *T_{EngMax}* can be chosen to be dependent upon current engine conditions, such as air temperature, engine temperature and air pressure.

*Tₐᵤₓ* is an auxiliary load torque corresponding to the maximum effect caused by auxiliary loads in the electricity system 10. *Tₐᵤₓ* is dependent upon the engine rotational speed and an auxiliary load power *Pₐᵤₓ. Pₐᵤₓ* can be chosen to have a fixed predetermined value corresponding to a maximum auxiliary load, including battery charging requirements and loads of electric components. A suitable value for *Pₐᵤₓ* in a medium size passenger vehicle is 3-4 kW.

Instead of having a fixed value, *Pₐᵤₓ* can be determined according to a predetermined scheme, at which the value of *Pₐᵤₓ* is determined based on the requested torque *T_{req}*. Thereby, at current operation conditions the priority of electrical components or groups of components are weighted against the torque requirements.

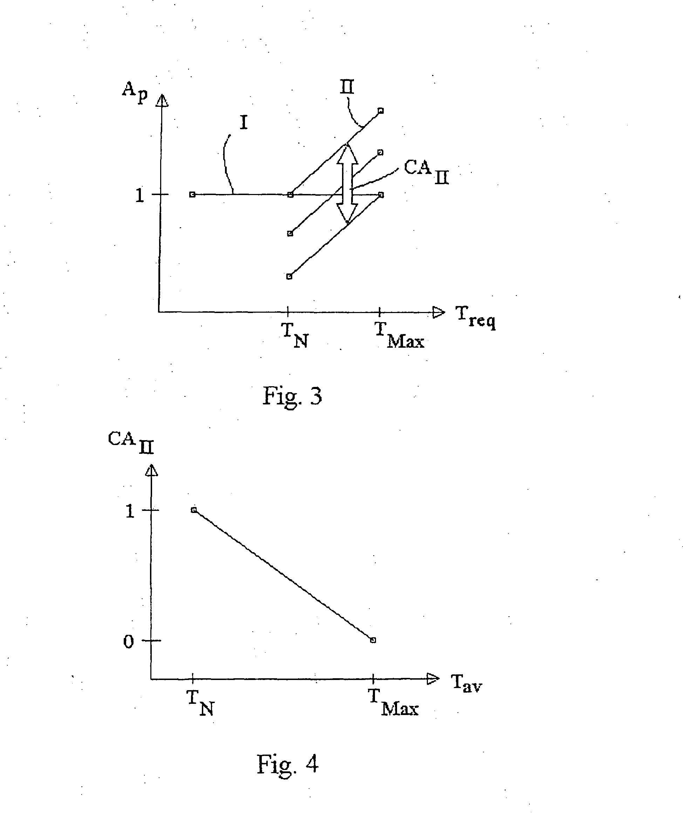

In a manner which will be described in greater detail below with reference to fig. 3 and 4, the drivetrain control means 14 calculates (block 109) an adjustment factor *Aₚ* for the accelerator pedal signal p, based on the requested torque *T_{req},* the available torque *Tₐᵥ,* the nominal toque *T_{N}* and a maximum torque *T_{Max}*. The maximum torque *T_{Max}* equals *T_{EngMax}* and *T_{ISGMax}* added together. *T_{ISGMax}* is the highest torque that can be produced by the ISG 8 and is predetermined. Alternatively, *T_{ISGMax}* can assume some other predetermined value, e.g. a highest torque allowed to be produced by the ISG 8.

The accelerator pedal signal p is adjusted by the adjustment factor *Aₚ* (block 110).

The vehicle speed v is determined in a manner known in the art (block 111). A decision is made by the drivetrain control means 14 based on the vehicle speed v and the adjusted accelerator pedal signal p, if a gear shift should be made in the transmission.

Fig. 3 and 4 show diagrams related to the determination of the adjustment factor *Aₚ* for the accelerator pedal signal p (block 109 in fig. 2). Input information in fig. 3 is the requested torque *T_{req}*. For each value of *T_{req}* a value of the adjustment factor *Aₚ* is given by a line, I or II, which ever gives the highest value of *Aₚ* for the value of *T_{req}.* Line I corresponds to a constant *Aₚ* of 1, i.e. no adjustment of the accelerator pedal signal. Line II which also could be a curve, corresponds to increasing *Aₚ* with increasing *T_{req}*.

Depending on the available torque *T*ₐᵥ, the line II is moved vertically in the diagram in fig. 3. The vertical position of the line II is determined by a value of a curve adjustment parameter *CA₁₁*, which is dependent on the available torque *Tₐᵥ,* and illustrated by a wide double arrow in fig. 3.

Fig. 4 depicts the determination of *CA_{II}.* When *Tₐᵥ* equals the maximum torque *T_{Max}* which, according to the description above, corresponds to the highest level of torque which can be produced by the drivetrain, *CA_{II}* is set to zero, which corresponds to the lowest level of the line II in fig. 3. When *Tₐᵥ* equals the nominal torque *T_{N}* which, deduced form the description above, can be said to correspond to the lowest level of torque which can be guaranteed by the drivetrain, *CA_{II}* is set to 1. This corresponds to the highest level of the line II in fig. 3.

Thus, the line II in fig. 3 can take an infinite number of or a plurality of vertical positions between two extreme positions. The lowest position corresponds to the available torque being equal to the maximum torque at which no adjustment of the pedal signal p is needed, and for all values of *T_{req}, Aₚ* is set to 1. The highest position of the line II corresponds to the available torque being equal to the nominal torque at which no adjustment of the pedal signal p is made for values of *T_{req}* below *T_{N}*, but for values of *T_{req}* above *T_{N}, Aₚ* is set to a value above 1, and the accelerator pedal signal is adjusted upward.

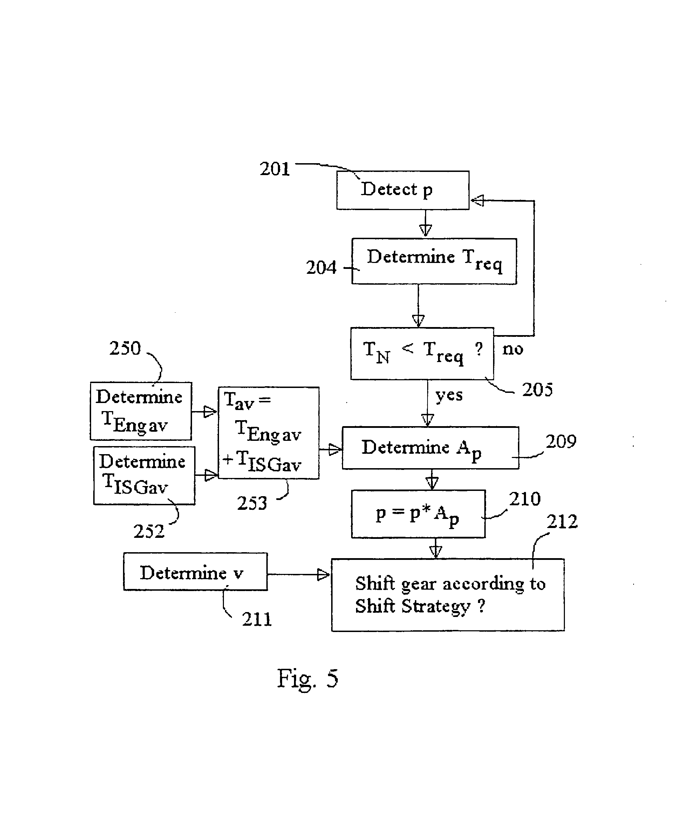

The flowchart in fig. 5 depicts a method according to an alternative embodiment of the invention. Many of the steps in the alternative method correspond to steps in the method described in connection to fig. 2 above. Thus, a detection by the drivetrain control means 14 of a signal p corresponding to the setting of the accelerator pedal is carried out (block 201), and in response thereto, the drivetrain control means 14 determines (block 204) a corresponding requested crankshaft torque *T_{req}.*

Thereafter, the requested torque *T_{req}* is compared to the nominal torque *T_{N}* (block 205). If the requested torque *T_{req}* is smaller than the nominal torque *T_{N}*, the steps above are repeated (blocks 201-205).

The drivetrain control means 14 determines an available torque of the engine *T_{Engav}* (block 250), and an available ISG torque T*_{ISGav}* (block 252), in a manner similar to what has been described above in connection to fig. 2. The available torque *Tₐᵥ* is determined (block 253) as *Tₐᵥ=T_{Engav}* + *T_{ISGav}*.

If the requested torque *T_{req}* is greater than the nominal torque *T_{N}* (block 205), the drivetrain control means 14 thereafter calculates (block 209), similar to what has been described above, an adjustment factor *Aₚ* for the accelerator pedal signal p, the accelerator pedal signal p is adjusted by the adjustment factor *Aₚ* (block 210) and the vehicle speed v is determined, after which a decision is made by the drivetrain control means, if a gear shift should be made in the transmission.

The alternative embodiment described in connection to fig. 5 provides for a comparison between the requested and the available torque before the ISG is engaged. This will in turn limit the use of the ISG in cases where torque provided by the engine only suffices.

In the embodiments described above, accelerator pedal signals form an input parameter for the gear shift schedule and are adjusted to force a downshift, when available torque does not meet requested torque. As an alternative other gear shift schedule input parameters can be adjusted to accomplish the same effect. Thus, where the requested torque forms a gear shift schedule input parameter, this can be adjusted by a requested torque adjustment factor *A_{T}*, to form an adjusted requested torque as *T_{req}*=*A_{T}* **T_{req}*.

As a further alternative an adjustment factor *Aᵥ* can be calculated for the vehicle speed, where the latter forms a gear shift schedule input parameter. Thus, an adjusted vehicle speed can be calculated as v = *Aᵥ* *v. Also, where the traction effected by the wheels of the vehicle forms a gear shift schedule input parameter, this can be adjusted by a wheel traction adjustment factor in a similar way to what has been described above.

Another alternative could include adjusting more than one of the gear shift schedule input parameters.

Above, the invention has been described in relation to an automatic transmission. However, the invention is also applicable on any other type of transmission, where some type of automatic gear control is involved, such as in a automated shifted manual transmission, or a continuously variable transmission (CVT).

## Claims

1. A method in a vehicle comprising a drivetrain (1), comprising a drive unit (2), such as an internal combustion engine, with a motive power output, a transmission (4), mechanically connected to the motive power output, directly or indirectly, and an electric machine (8), which can be used at least as a motor, mechanically connected to the motive power output, directly or indirectly, the vehicle further comprising an accelerator control device (15) and drivetrain control means (14), which is connected to the accelerator control device (15) and the drivetrain (1), the drivetrain control means (14) being adapted to select a gear of the transmission based on a set of gear shift control elements, including at least one gear shift schedule and at least one gear shift schedule input parameter (p, v), and to send at least one signal to the transmission so as to control the gear state of the latter, the method comprising the steps of
- receiving (101, 201) at least one signal (p) from the accelerator control device (15),
- determining (104, 204) a requested torque (*T_{req}*) of the drivetrain, at least partly based on the signal from the accelerator control device,
- determining (152, 252) an available torque (*T_{ISGav}*) of the electric machine,
- determining (154, 253) an available torque (*Tₐᵥ*) of the drivetrain, at least partly based on the available torque (*T_{ISGav}*) of the electric machine, and
- adjusting (110, 210) the set of gear shift control elements at least partly based on the requested torque (*T_{req}*) and the available torque *(Tₐᵥ),* **characterized in that** the step of adjusting (110, 210) the set of gear shift control elements comprises adjusting (110, 210) at least one of the gear shift schedule input parameters.

2. A method according to claim 1, wherein the step of adjusting at least one of the gear shift schedule input parameters comprises adjusting a signal (p) corresponding to the setting of an accelerator pedal (15).

3. A method according to claim 2, comprising determining an adjustment factor (*Aₚ*) for the accelerator pedal setting signal (p).

4. A method according to claim 3, **characterized by**
- determining, based on the available torque (*Tₐᵥ*), a value of a curve adjustment parameter *(CA_{II})*,
- adjusting, based on the value of the curve adjustment parameter (*CA_{II}*), a relationship (II) between the requested torque (*T_{req}*) and the adjustment factor (*Aₚ*) for the accelerator pedal setting signal (p),
- and performing said step of adjusting (210) at the accelerator pedal setting signal (p) if a value of the adjustment factor (*Aₚ*), determined on the basis of the requested torque (*T_{req}*) and said relationship (II) between the requested torque (*T_{req}*) and the adjustment factor (*Aₚ*)*,* is higher than a constant value of the adjustment factor (*Aₚ*) equal to 1..

5. A method according to claim 1, wherein the step of adjusting at least one of the gear shift schedule input parameters comprises adjusting the requested torque (*T_{req}*).

6. A method according to claim 5, comprising determining an adjustment factor *(A_{T})* for the requested torque *(T_{req}).*

7. A method according to claim 1, wherein the step of adjusting at least one of the gear shift schedule input parameters comprises adjusting a determined vehicle speed (v).

8. A method according to claim 7, comprising determining an adjustment factor (*Aᵥ*) for the vehicle speed (v).

9. A method according to claim 1, wherein the step of adjusting at least one of the gear shift schedule input parameters comprises adjusting a determined traction effected by the wheels of the vehicle.

10. A method according to claim 9, comprising determining an adjustment factor (Av) for the wheel traction.

## Patentansprüche

1. Verfahren in einem Fahrzeug, das einen Antriebsstrang (1) umfasst, der eine Antriebseinheit (2), wie beispielsweise einen Verbrennungsmotor mit einem Antriebskraftausgang, ein Getriebe (4), das mechanisch direkt oder indirekt mit dem Antriebskraftausgang verbunden ist, sowie eine elektrische Maschine (8) umfasst, die wenigstens als ein Motor verwendet werden kann und mechanisch direkt oder indirekt mit dem Antriebskraftausgang verbunden ist, wobei das Fahrzeug des Weiteren eine Gaspedal-Steuervorrichtung (15) und eine Antriebsstrang-Steuereinrichtung (14) umfasst, die mit der Gaspedal-Steuervorrichtung (15) und dem Antriebsstrang (1) verbunden ist, wobei die Antriebsstrang-Steuereinrichtung (14) so eingerichtet ist, dass sie ein Zahnrad des Getriebes auf Basis eines Satzes von Gangschalt-Steuerelementen auswählt, die wenigstens einen Gangschaltplan und wenigstens einen Gangschaltplan-Eingabeparameter (p, v) enthalten und wenigstens ein Signal zu dem Getriebe sendet, um den Schaltzustand des letzteren zu steuern, wobei das Verfahren die folgenden Schritte umfasst:
- Empfangen (101, 201) wenigstens eines Signals (p) von der Gaspedal-Steuervorrichtung (15),
- Bestimmen (104, 204) eines angeforderten Drehmomentes (*T_{req}*) des Antriebsstrangs wenigstens teilweise auf Basis des Signals von der Gaspedal-Steuervorrichtung,
- Bestimmen (152, 252) eines verfügbaren Drehmomentes (*T_{ISGav}*) der elektrischen Maschine,
- Bestimmen (154, 253) eines verfügbaren Drehmomentes *(Tₐᵥ)* des Antriebsstrangs wenigstens teilweise auf Basis des verfügbaren Drehmomentes (T_{ISGav}) der elektrischen Maschine, und
- Regulieren (110, 210) des Satzes von Gangschalt-Steuerelementen wenigstens teilweise auf Basis des angeforderten Drehmomentes (*T_{req}*) und des verfügbaren Drehmomentes *(Tₐᵥ),* **dadurch gekennzeichnet, dass** der Schritt des Regulierens (110, 210) des Satzes von Gangschalt-Steuerelementen Regulieren (110, 210) wenigstens eines der Gangschaltplan-Eingabeparameter umfasst.

2. Verfahren nach Anspruch 1, wobei der Schritt des Regulierens wenigstens eines der Gangschaltplan-Eingabeparameter Regulieren eines Signals (p) umfasst, das der Einstellung eines Gaspedals (15) entspricht.

3. Verfahren nach Anspruch 2, das Bestimmen eines Regulierungsfaktors (*Aₚ*) für das Gaspedal-Einstellungssignal (p) umfasst.

4. Verfahren nach Anspruch 3, **gekennzeichnet durch**
- Bestimmen eines Wertes eines Kurrren-Regulierungsparameters (*CA_{II}*) auf Basis des verfügbaren Drehmomentes *(Tₐᵥ),*
- Regulieren einer Beziehung (II) zwischen dem angeforderten Drehmoment *(T_{req})* und dem Regulierungsfaktor (*Aₚ*) für das Gaspedal-Einstellungssignal (p) auf Basis des Wertes des Kurven-Regulierungsparameters *(CA_{II}),*
- und Durchführen des Schrittes des Regulierens (210) bei dem Gaspedal-Einstellungssignal (p), wenn ein Wert des Regulierungsfaktors (*Aₚ*), bestimmt auf Basis des angeforderten Drehmomentes *(T_{req})* und der Beziehung (II) zwischen dem angeforderten Drehmoment (*T_{req}*) und dem Regulierungsfaktor (*Aₚ*), höher ist als ein konstanter Wert des Regulierungsfaktors (*Aₚ*) gleich 1.

5. Verfahren nach Anspruch 1, wobei der Schritt des Regulierens wenigstens eines der Gangschaltplan-Eingabeparameter Regulieren des angeforderten Drehmomentes (*T_{req}*) umfasst.

6. Verfahren nach Anspruch 5, das Bestimmen eines Regulierungsfaktors *(A_{T})* für das angeforderte Drehmoment (*T_{req}*) umfasst.

7. Verfahren nach Anspruch 1, wobei der Schritt des Regulierens wenigstens eines der Gangschaltplan-Eingabeparameter Regulieren einer bestimmten Fahrzeuggeschwindigkeit (v) umfasst.

8. Verfahren nach Anspruch 7, das Bestimmen eines Regulierungsfaktors (*Aᵥ*) für die Fahrzeuggeschwindigkeit (v) umfasst.

9. Verfahren nach Anspruch 1, wobei der Schritt des Regulierens wenigstens eines der Gangschaltplan-Eingabeparameter Regulieren einer bestimmten Traktion umfasst, die durch die Räder des Fahrzeugs bewirkt wird.

10. Verfahren nach Anspruch 9, das Bestimmen eines Regulierungsfaktors (Av) für die Rad-Traktion umfasst.

## Revendications

1. Un procédé pour un véhicule comportant un système de propulsion (1), comportant un groupe moteur (2), tel qu'un moteur à combustion interne, avec une sortie de puissance motrice, une transmission (4), reliée mécaniquement à la sortie de puissance motrice, directement ou indirectement, et une machine électrique (8), laquelle peut être utilisée au moins comme un moteur, reliée mécaniquement à la sortie de puissance motrice, directement ou indirectement, le véhicule comportant en outre un dispositif de commande d'accélérateur (15) et un moyen de commande de système de propulsion (14), lequel est relié au dispositif de commande d'accélérateur (15) et au système de propulsion (1), le moyen de commande du système de propulsion (14) étant adapté pour sélectionner un rapport de vitesse de la transmission en se basant sur un ensemble d'éléments de commande de changement de vitesse, comprenant au moins un schéma de changement de vitesse et un paramètre d'entrée de schéma de changement de vitesse (p, v), et pour envoyer au moins un signal à la transmission afin de vérifier l'état de rapport de vitesse de cette dernière, le procédé comportant les étapes de
- réception (101, 201) d'au moins un signal (p) du dispositif de commande d'accélérateur (15),
- détermination (104, 204) d'un couple requis *(T_{req})* par le système de propulsion, en se basant au moins partiellement sur le signal provenant du dispositif de commande d'accélérateur,
- détermination (152, 252) d'un couple disponible (*T_{ISGav}*) de la machine électrique,
- détermination (154, 253) d'un couple disponible *(Tₐᵥ)* du système de propulsion, en se basant au moins partiellement sur le couple disponible (*T_{ISGav}*) de la machine électrique, et
- ajustement (110, 210) de l'ensemble d'éléments de commande de changement de vitesse en se basant au moins partiellement sur le couple requis *(T_{req})* et le couple disponible *(Tₐᵥ),* **caractérisé en ce que** l'étape d'ajustement (110, 210) de l'ensemble d'éléments de commande de changement de vitesse comporte l'ajustement (110, 210) d'au moins un des paramètres d'entrée du schéma de changement de vitesse.

2. Un procédé selon la revendication 1, dans lequel l'étape d'ajustement d'au moins un des paramètres d'entrée du schéma de changement de vitesse comporte l'ajustement d'un signal (p) correspondant au réglage d'une pédale d'accélérateur (15).

3. Un procédé selon la revendication 2, comportant la détermination d'un facteur d'ajustement (*Aₚ*) pour le signal de réglage de la pédale d'accélérateur (p).

4. Un procédé selon la revendication 3, **caractérisé par**
- la détermination, basée sur le couple disponible (*Tₐᵥ*), d'une valeur d'un paramètre d'ajustement de courbe (*CA_{II}*)*,*
- l'ajustement, basé sur la valeur du paramètre d'ajustement de courbe *(CA_{II}),* d'une relation (II) entre le couple requis *(T_{req})* et le facteur d'ajustement *(Aₚ)* pour le signal de réglage de la pédale d'accélérateur (p),
- et la performance de ladite étape d'ajustement (210) au signal d'ajustement de la pédale d'accélérateur (p) si une valeur du facteur d'ajustement *(Ap),* déterminée à partir du couple requis (*T_{req}*) et de ladite relation (II) entre le couple requis (*T_{req}*) et le facteur d'ajustement (*Aₚ*), est plus haute que la valeur constante du facteur d'ajustement (*Aₚ*) étant égal à 1.

5. Un procédé selon la revendication 1, dans lequel l'étape d'ajustement d'au moins un des paramètres d'entrée de schéma de changement de vitesse comporte l'ajustement du couple requis (*T_{req}*)*.*

6. Un procédé selon la revendication 5, comportant la détermination d'un facteur d'ajustement (*A_{T}*) pour le couple requis (*T_{req}*)*.*

7. Un procédé selon la revendication 1, dans lequel l'étape d'ajustement d'au moins un des paramètres d'entrée de schéma de changement de vitesse comporte l'ajustement d'une vitesse déterminée de véhicule (v).

8. Un procédé selon la revendication 7, comportant la détermination d'un facteur d'ajustement (*Aᵥ*) pour la vitesse du véhicule (v).

9. Un procédé selon la revendication 1, dans lequel l'étape d'ajustement d'au moins un des paramètres d'entrée de schéma de changement de vitesse comporte l'ajustement d'une traction déterminée effectuée par les roues du véhicule.

10. Un procédé selon la revendication 9, comportant la détermination d'un facteur d'ajustement (Av) pour la traction de roue.
